# EUROPEAN PATENT SPECIFICATION

(11) **EP 3 943 799 B1**
(45) Date of publication and mention of the grant of the patent: **26.07.2023**
(21) Application number: 21461573.4
(22) Date of filing: 26.07.2021
(51) Int. Cl.: F16P 3/14

(54) **A METHOD AND SYSTEM FOR SAFEGUARDING ELECTRICAL DEVICES**
VERFAHREN UND SYSTEM ZUR SICHERUNG VON ELEKTRISCHEN VORRICHTUNGEN
PROCÉDÉ ET SYSTÈME POUR PROTÉGER DES DISPOSITIFS ÉLECTRIQUES

(30) Priority: 24.07.2020 PL 43477921
(43) Date of publication of application: 26.01.2022
(73) Proprietor: Olszewski Tymoteusz Bitland, 87-100 Torun (PL)
(72) Inventor: OLSZEWSKI, Tomasz, 87-100 Torun (PL); ZAKRZEWSKI, Tomasz, 87-140 Chelmza (PL)
(74) Representative: Witek, Rafal

(56) References cited:
- EP-A2- 0 793 208
- WO-A1-01/33134
- WO-A1-2004/048844

## Description

### Technical field

The object of the invention is a method and system for safeguarding electrical devices.

### Background of the invention

There are known mechanical emergency off-switches of electrical devices, used for emergency stopping of machines and devices in the event of a malfunction or an accident. The activation of such off-switches requires intentional and deliberate activation of a safety button, stopping the operation of the device. In the case of such solutions, the person operating the machine or device frequently cannot deactivate it in an emergency by themselves, due to the unavailability of an off-switch, or due to being incapable of a deliberate and effective reaction caused by danger. The applied emergency off-switches are also ineffective for bystanders, who have entered the danger zone accidentally and without knowledge about the devices, and who can be accidentally hurt. Due to this, there is a need to develop solutions enabling the protection of all individuals who come into contact with machines and devices in an entirely automatic manner (with no deliberate intervention of the user).

From the American patent application US20080278007A1, there is a known arrangement for deactivating devices in response to voice commands. Said arrangement comprises a microphone, a device for receiving the data collected by said microphone, including voice commands, and interpreting them based on patterns stored in internal memory of the arrangement in order to properly control relays enabling an emergency shutdown of the safeguarded device. The disclosed arrangement enables maintaining increased safety in situations, in which the use of a physical switch by the operator of the device can be impossible or ineffective.

From the American patent application US20110025454A1, there is a known hybrid system for emergency deactivation of a safeguarded device, intended in particular for industrial machines and controlled solely by the operator of the device. This system comprises a processor adjusted to interpret data received from at least one microphone, recognise them, for example the machine operator's scream, and activate contactors for an emergency shutdown of the safeguarded device. Moreover, said microphone can be connected to the processor both in a wireless manner and by using wires. The system according to the present disclosure enables the implementation of emergency off-switches in conventional industrial machines with no need to change the wiring or the design of the machine.

In known solutions, it is required to perform specific actions in order to activate the safeguard. In the document US20080278007A1, it is required to activate a neck-worn radio voice receiver. In the solution described in the patent application US20110025454A1, it is in turn required to deliberately issue a specific command or physically activate the off-switch. Document EP0793208A2 discloses a similar safety system.

Due to the effort to ensure the safety of individuals who are in contact with machines and devices, in particular powered by electrical energy, it was desirable to develop such a design of an emergency safety off-switch, which would increase the efficiency of the existing solutions and would enable the use of safeguards in a larger number of machines and devices, taking into account autonomous vehicles and robots, operating, e.g. in public spaces and households.

### The essence of the invention

The object of the invention is a method for safeguarding electrical devices using a continuous analysis of background sound, in which power is supplied to the system for safeguarding the electrical device and the correct operation of the system for safeguarding the electrical device is verified. In the event of incorrect operation of the system, this fact is signalled, preferably by means of a lighting and/or acoustic signal. In the event of correct operation of the safety system, the power of the safeguarded electrical device is turned on, followed by a continuous analysis of the background sound, in which continuous monitoring of the background sounds is performed, sounds with a frequency different from the frequency of human voice are filtered out, the filtered out background sounds are compared to the sound patterns of human scream caused by pain and/or fear, and in the event of detecting conformance of the recorded sound with the pattern of human scream caused by pain and/or fear, the power is cut off from the safeguarded electrical device.

Preferably, after cutting off the power of the safeguarded electrical device, a message about the accident is transmitted automatically to at least one predefined receiver. Preferably, universal scream patterns are used, not considering the gender, age and/or nationality of the protected individuals.

Preferably, cutting off the power is signalled by means of at least one lighting device. Preferably, cutting off the power is signalled by means of at least one acoustic device.

Moreover, the object of the invention is a system for safeguarding electrical devices, comprising a sound analysing unit and a module connected to the sound analysing unit, controlling the power of the electrical device, in particular for emergency deactivation of the power of the electrical device, and at least one microphone receiving background noises connected to the sound analysing unit. The sound analysing unit of the present system is provided with a microcomputer adjusted to store the patterns of human scream caused by pain and/or fear, and to receive data from at least one microphone, compare them to the patterns of human scream caused by pain and/or fear stored therein, and to convert the result of this comparison into a signal controlling the module controlling the power of the electrical device. Moreover, the microcomputer is adjusted to verify the correct operation of the system and transmit the control signal to the module controlling the power of the electrical device, and to automatically switch the system into a continuous analysis mode, in which continuous monitoring of background sounds is performed, sounds with a frequency different from the frequency of human voice are filtered out, the background sounds are compared to the sound patterns of human scream caused by pain and/or fear, and in the event of detecting conformance of the recorded sound with the pattern of human scream caused by pain and/or fear, power is cut off from the safeguarded electrical device.

Preferably, the system comprises at least one lighting device, preferably a control diode.

Preferably, the control diode is adjusted to indicate the current status of the system and/or to signal the cutting off of the power of the electrical device.

Preferably, the system comprises a programmable communication module for transmitting messages about cutting off the power of the safeguarded electrical device to at least one defined receiver.

Preferably, the module controlling the power of the electrical device is an electronic or electromechanical module.

Preferably, the microphone receiving background noises is a microphone adjusted to operate in a frequency range of 20 Hz to 20 kHz.

Preferably, the microphone receiving background noises is a wireless microphone.

Preferably, the microphone receiving background noises is adjusted to communicate in the WiFi and/or Bluetooth technology.

### Advantages of the invention

The system for safeguarding electrical devices according to invention constitutes a universal solution, since it can constitute an integral part of a safeguarded electrical device, or a separate solution, which serves its functions to the same extent.

The system according to the invention enables protecting in a continuous manner not just the individual operating the safeguarded electrical device, but also all individuals entering the operating range of at least one microphone of the system and reacting to danger by screaming.

The system according to the invention is an autonomous solution, due to which its user does not have to be trained in emergency deactivation of the safeguarded electrical device. This is particularly important for electrical household appliances, the contact with which can be had by underage and/or mentally handicapped individuals.

The system according to the invention provides faster cutting off of the power of a safeguarded electrical device relative to solutions known from prior art, and as a result it increases the chances of surviving an accident and limits the risk of a health detriment.

Moreover, the system according to the invention enables automatic notification of specific individuals about the accident, including medical services, which allows for providing timely assistance to the victim.

Furthermore, the system according to the invention allows for activation of the safeguarded electrical device solely in the event of correct operation of said system.

### Description of the drawings

The subject of the invention is shown in an embodiment in the drawing, in which:
Fig. 1 presents a flowchart of the method for safeguarding electrical devices using a continuous analysis of background sound according to the first embodiment of the invention;

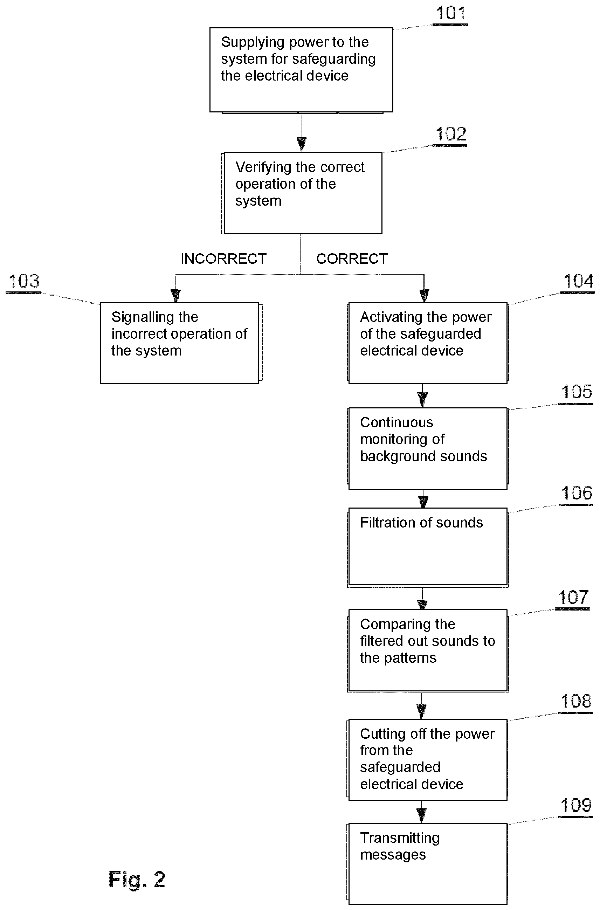

Fig. 2 presents a flowchart of the method for safeguarding electrical devices using a continuous analysis of background sound according to the second embodiment of the invention;

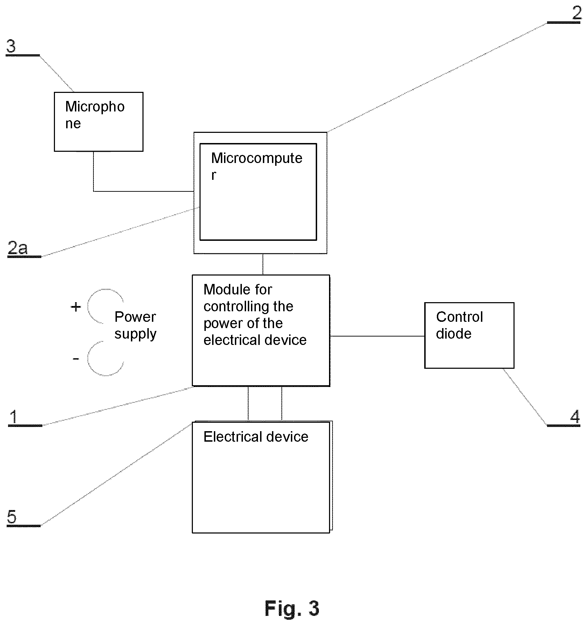

Fig. 3 presents a layout of the system for safeguarding electrical devices according to the first embodiment of the invention;

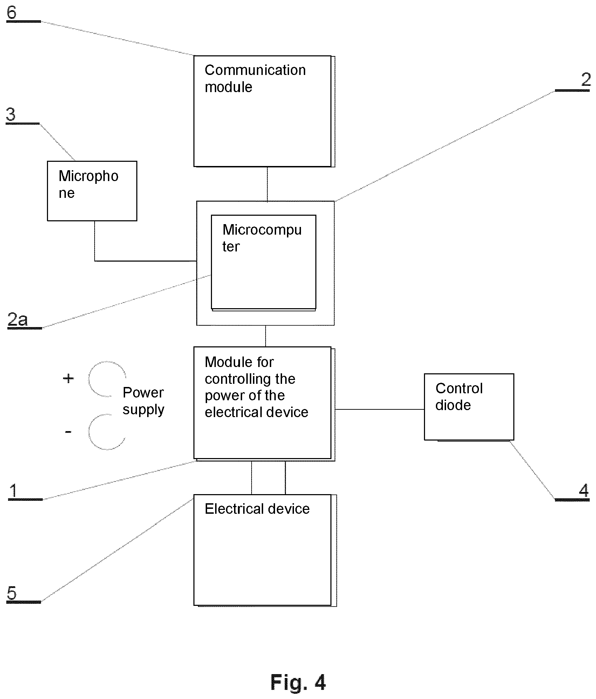

Fig. 4 presents a layout of the system for safeguarding electrical devices according to the second embodiment of the invention.

### Detailed description of the solution according to the invention

### First embodiment of the method for safeguarding an electrical device

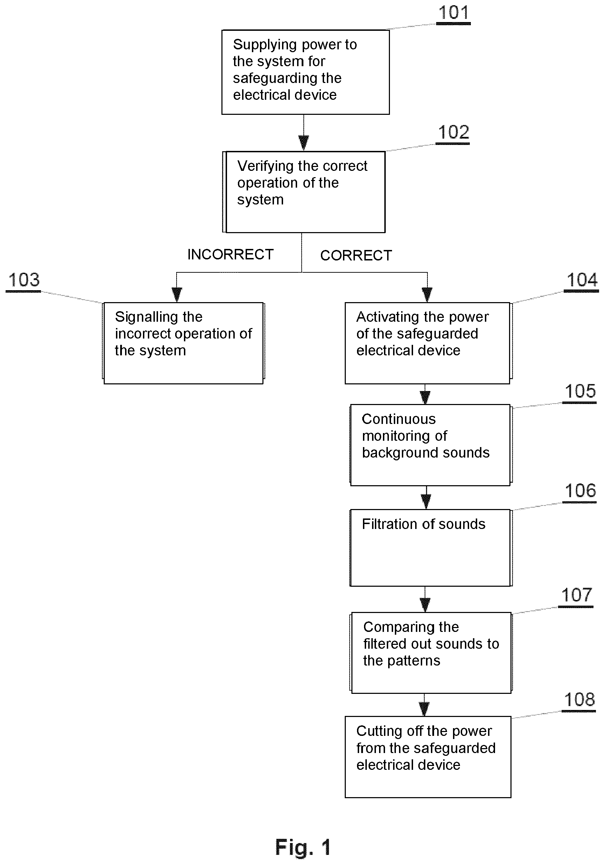

Fig. 1 presents a flowchart of the method for safeguarding electrical devices using a continuous analysis of the background sound, in which electrical power is supplied 101 to the system for safeguarding the electrical device.

The system safeguarding an electrical device is incorporated in series in the power supply system of the electrical device 5. The system comprises a module 1 controlling the power of the electrical device 5, in particular for emergency deactivation of the power of the electrical device 5, connected to a sound analysing unit 2. Moreover, the system comprises a microphone 3 receiving background noises (a larger number of microphones can be used depending on the needs, the size of the safeguarded device, the sound detection area for the device operator and bystanders, in order to provide a full range of detection for scream sounds regardless of the size of the device), which is connected to the sound analysing unit 2. Preferably, the microphone 3 is a wireless microphone adjusted to operate in a frequency range of 20 Hz to 20 kHz. In sample embodiments of the system, the microphone 3 can be connected to the sound analysing unit 2 for the voice using WiFi or Bluetooth wireless communication standards. The sound analysing unit 2 is in turn provided with a microcomputer 2a. After supplying power to the system, the correct operation of the system for safeguarding the electrical device is verified 102 by means of the microcomputer 2a. In the event of incorrect operation of the system, this fact is signalled 103, for example by means of a lighting and/or acoustic signal. For example by means of a control diode 4, which is lit red. At the same time, the microcomputer 2a transmits a control signal to the module 1, enabling the supply of power to the electrical device 5.

In the event of correct operation of the safety system, the power of the safeguarded electrical device 5 is in turn turned on 104 by the module 1 by means of the control signal transmitted to the module 1 by the microcomputer 2a. At the same time, the microcomputer 2a automatically switches the operation of the system into the mode of a continuous analysis of the background sound, and the control diode 4 is lit green. Continuous monitoring of background sounds from the microphone 3 is performed 105 during the analysis. Sounds with a frequency different from the frequency of human voice are filtered out 106 by means of the sound analysing unit 2. Subsequently, by means of the microcomputer 2a, the filtered-out background sounds are compared 107 to the sound patterns of human scream caused by pain and/or fear stored therein. In the event of detecting the conformance of the recorded sound with the pattern of human scream caused by pain and/or fear by the microcomputer 2a, the microcomputer 2a transmits the control signal to the module 1, which cuts off 108 the power from the safeguarded electrical device 5.

### Second embodiment of the method for safeguarding an electrical device

The execution of the method for safeguarding an electrical device proceeds as in the first embodiment, wherein after cutting off 108 the power from the safeguarded electrical device 5, a message is transmitted 109 to at least one defined receiver (for example, rescue services) by a programmable electronic communication module 6 (in another embodiment, the module can be an electromechanical module), for example using a wireless communication technology (SMS, WiFi, Bluetooth, Email). In some embodiments, the message is transmitted to additional systems providing safety. The method and system for safeguarding electrical devices according to the invention can be used to protect individuals working with large industrial machines, as well as individuals using electrical hand tools, household appliances, which can be harmful to health or lead to the operator's death. The arrangement according to the invention can also be used in all kinds of warehouses, silos and metal containers with mechanical elements.

## Claims

1. A method for safeguarding electrical devices using a continuous analysis of background sound, **characterised in that**
- power is supplied (101) to the system protecting the electrical device (5),
- the correct operation of the system for safeguarding the electrical device (5) is verified (102), wherein
- in the event of incorrect operation of the system, this fact is signalled (103), preferably by means of a lighting and/or acoustic signal,
- in the event of correct operation of the safety system, the power of the safeguarded electrical device (5) is turned on (104), followed by a continuous analysis of the background sound, in which:
- continuous monitoring of background sounds is performed (105),
- sounds with a frequency different from the frequency of human voice are filtered out (106),
- the filtered-out background sounds are compared (107) to the sound patterns of human scream caused by pain and/or fear,
- in the event of detecting conformance of the recorded sound with the pattern of human scream caused by pain and/or fear, the power is cut off (108) from the safeguarded electrical device (5).

2. The method according to claim 1, **characterised in that**, after cutting off the power of the safeguarded electrical device, a message is transmitted (109) to at least one predefined receiver.

3. The method according to claim 1 or 2, **characterised in that** universal scream patterns are used, not considering the gender, age and/or nationality of the protected individuals.

4. The method according to claim 1 or 2 or 3, **characterised in that** cutting off (108) the power is signalled by means of at least one lighting device.

5. The method according to any of the preceding claims, **characterised in that** cutting off the power is signalled by means of at least one acoustic device.

6. A system for safeguarding electrical devices intended for the execution of steps according to any of the claims from 1 to 5, comprising:
- a sound analysing unit (2)
- a module (1) connected to the sound analysing unit (2), controlling the power of the electrical device (5), in particular for emergency deactivation of the power of the electrical device,
- at least one microphone (3) receiving background noises connected to the sound analysing unit (2),
- wherein the sound analysing unit (2) is provided with a microcomputer (2a) adjusted to store the patterns of human scream caused by pain and/or fear, and to receive data from at least one microphone (3), compare them to the patterns of human scream caused by pain and/or fear stored therein, and to convert the result of this comparison into a signal controlling the module (1) controlling the power of the electrical device (5); **characterised in that**
the microcomputer (2a) is adjusted to verify the correct operation of the system and transmit the control signal to the module (1) controlling the power of the electrical device (5), and to automatically switch the system into a continuous analysis mode, in which:
- continuous monitoring of background sounds is performed,
- sounds with a frequency different from the frequency of human voice are filtered out,
- the background sounds are compared to the sound patterns of human scream caused by pain and/or fear,
- in the event of detecting conformance of the recorded sound with the pattern of human scream caused by pain and/or fear, the power is cut off from the safeguarded electrical device (5).

7. The system according to claim 6, **characterised in that** it comprises at least one lighting device, preferably a control diode (4).

8. The system according to claim 7, **characterised in that** the control diode (4) is adjusted to indicate the current status of the system and/or to signal the cutting off of the power of the electrical device (5).

9. The system according to any of the preceding claims, **characterised in that** it comprises a programmable communication module for transmitting messages about cutting off the power of the safeguarded electrical device (5) to at least one defined receiver.

10. The system according to any of the preceding claims, **characterised in that** the module (1) controlling the power of the electrical device is an electronic or electromechanical module.

11. The system according to any of the preceding claims, **characterised in that** the microphone (3) receiving background noises is a microphone adjusted to operate in a frequency range of 20 Hz to 20 kHz.

12. The system according to any of the preceding claims, **characterised in that** the microphone (3) receiving background noises is a wireless microphone.

13. The system according to any of the preceding claims, **characterised in that** the microphone (3) receiving background noises is adjusted to communicate in the WiFi and/or Bluetooth technology.

## Patentansprüche

1. Verfahren zum Absichern elektrischer Geräte mit Hilfe einer kontinuierlichen Analyse von Hintergrundschall, **dadurch gekennzeichnet, dass**
- dem System, das das elektrische Gerät (5) absichert, Strom zugeführt wird (101),
- der korrekte Betrieb des Systems zum Absichern des elektrischen Geräts (5) überprüft wird (102), wobei
- im Falle eines inkorrekten Betriebs des Systems diese Tatsache signalisiert wird (103), vorzugsweise mittels eines optischen und/oder akustischen Signals,
- im Falle eines korrekten Betriebs des Sicherheitssystems die Stromzufuhr des abgesicherten elektrischen Geräts (5) eingeschaltet wird (104), woraufhin eine kontinuierliche Analyse des Hintergrundschalls erfolgt, in der:
- eine kontinuierliche Überwachung der Hintergrundgeräusche durchgeführt wird (105),
- Geräusche mit einer Frequenz, die von der Frequenz einer menschlichen Stimme verschieden ist, herausgefiltert werden (106),
- die gefilterten Hintergrundgeräusche mit den Geräuschmustern menschlicher Schreie, die durch Schmerzen und/oder Angst verursacht werden, verglichen werden (107),
- im Falle des Nachweises einer Übereinstimmung des aufgenommenen Geräuschs mit dem Muster menschlicher Schreie, die durch Schmerzen und/oder Angst verursacht werden, die Stromzufuhr des abgesicherten elektrischen Geräts (5) ausgeschaltet wird (108).

2. Verfahren gemäß Anspruch 1, **dadurch gekennzeichnet, dass** nach dem Ausschalten der Stromzufuhr des abgesicherten elektrischen Geräts eine Nachricht an wenigstens einen vordefinierten Empfänger übermittelt wird (109).

3. Verfahren gemäß Anspruch 1 oder 2, **dadurch gekennzeichnet, dass** universelle Schreimuster verwendet werden, die das Geschlecht, Alter und/oder die Nationalität der geschützten Individuen außer Acht lassen.

4. Verfahren gemäß Anspruch 1 oder 2 oder 3, **dadurch gekennzeichnet, dass** das Ausschalten (108) der Stromzufuhr mittels wenigstens einer Beleuchtungsvorrichtung signalisiert wird.

5. Verfahren gemäß einem der vorstehenden Ansprüche, **dadurch gekennzeichnet, dass** das Ausschalten der Stromzufuhr mittels wenigstens einer akustischen Vorrichtung signalisiert wird.

6. System zum Absichern elektrischer Geräte, das für die Ausführung von Schritten gemäß einem der Ansprüche 1 bis 5 vorgesehen ist, umfassend:
- eine Schallanalyseeinheit (2),
- ein Modul (1), das an die Schallanalyseeinheit (2) angeschlossen ist und die Stromzufuhr des elektrischen Geräts (5) steuert, insbesondere zur Notfalldeaktivierung der Stromzufuhr des elektrischen Geräts,
- wenigstens ein Mikrophon (3), das Hintergrundgeräusche empfängt und an die Schallanalyseeinheit (2) angeschlossen ist,
- wobei die Schallanalyseeinheit (2) mit einem Mikrocomputer (2a) versehen ist, der so eingestellt ist, dass er die Muster menschlicher Schreie, die durch Schmerzen und/oder Angst verursacht werden, speichert und Daten von wenigstens einem Mikrophon (3) empfängt, diese mit den darin gespeicherten Mustern menschlicher Schreie, die durch Schmerzen und/oder Angst verursacht werden, vergleicht und das Ergebnis dieses Vergleichs in ein Signal umwandelt, das das Modul (1) steuert, welches die Stromzufuhr des elektrischen Geräts (5) steuert; **dadurch gekennzeichnet, dass**
der Mikrocomputer (2a) so eingestellt ist, dass er den korrekten Betrieb des Systems überprüft und das Steuersignal an das Modul (1) übermittelt, welches die Stromzufuhr des elektrischen Geräts (5) steuert, und das System automatisch in einen kontinuierlichen Analysemodus schaltet, in dem
- eine kontinuierliche Überwachung der Hintergrundgeräusche durchgeführt wird,
- Geräusche mit einer Frequenz, die von der Frequenz einer menschlichen Stimme verschieden ist, herausgefiltert werden,
- die Hintergrundgeräusche mit den Geräuschmustern menschlicher Schreie, die durch Schmerzen und/oder Angst verursacht werden, verglichen werden,
- im Falle des Nachweises einer Übereinstimmung des aufgenommenen Geräuschs mit dem Muster menschlicher Schreie, die durch Schmerzen und/oder Angst verursacht werden, die Stromzufuhr des abgesicherten elektrischen Geräts (5) ausgeschaltet wird.

7. System gemäß Anspruch 6, **dadurch gekennzeichnet, dass** es wenigstens eine Beleuchtungsvorrichtung umfasst, vorzugsweise eine Kontrolldiode (4).

8. System gemäß Anspruch 7, **dadurch gekennzeichnet, dass** die Kontrolldiode (4) so eingestellt ist, dass sie den aktuellen Status des Systems anzeigt und/oder dass sie das Ausschalten der Stromzufuhr des elektrischen Geräts (5) signalisiert.

9. System gemäß einem der vorstehenden Ansprüche, **dadurch gekennzeichnet, dass** es ein programmierbares Kommunikationsmodul zum Übermitteln von Nachrichten über das Ausschalten der Stromzufuhr des abgesicherten elektrischen Geräts (5) an wenigstens einen definierten Empfänger umfasst.

10. System gemäß einem der vorstehenden Ansprüche, **dadurch gekennzeichnet, dass** das Modul (1), das die Stromzufuhr des elektrischen Geräts steuert, ein elektronisches oder elektromechanisches Modul ist.

11. System gemäß einem der vorstehenden Ansprüche, **dadurch gekennzeichnet, dass** das Mikrophon (3), das Hintergrundgeräusche empfängt, ein Mikrophon ist, das so eingestellt ist, dass es in einem Frequenzbereich von 20 Hz bis 20 kHz arbeitet.

12. System gemäß einem der vorstehenden Ansprüche, **dadurch gekennzeichnet, dass** das Mikrophon (3), das Hintergrundgeräusche empfängt, ein drahtloses Mikrophon ist.

13. System gemäß einem der vorstehenden Ansprüche, **dadurch gekennzeichnet, dass** das Mikrophon (3), das Hintergrundgeräusche empfängt, so eingestellt ist, dass es mittels WiFi- und/oder Bluetooth-Technik kommuniziert.

## Revendications

1. Procédé de sauvegarde de dispositifs électriques utilisant une analyse continue du bruit de fond, **caractérisé en ce que**
- une alimentation est fournie (101) au système protégeant le dispositif électrique (5),
- le fonctionnement correct du système de sauvegarde du dispositif électrique (5) est vérifié (102), dans lequel
- en cas de fonctionnement incorrect du système, ce fait est signalé (103), préférentiellement au moyen d'un signal lumineux et/ou acoustique,
- en cas de fonctionnement correct du système de sécurité, l'alimentation du dispositif électrique (5) sauvegardé est mise sous tension (104), suivie d'une analyse continue du bruit de fond, dans laquelle :
- un contrôle continu des bruits de fond est effectué (105),
- les sons dont la fréquence est différente de celle de la voix humaine sont filtrés (106),
- les sons de fond filtrés sont comparés (107) aux modèles sonores de hurlement humain provoqué par la douleur et/ou la peur,
- en cas de détection de conformité du son enregistré avec le modèle de hurlement humain provoqué par la douleur et/ou la peur, l'alimentation est coupée (108) du dispositif électrique (5) sauvegardé.

2. Procédé selon la revendication 1, **caractérisé en ce que**, après avoir coupé l'alimentation du dispositif électrique sauvegardé, un message est transmis (109) à au moins un récepteur prédéfini.

3. Procédé selon la revendication 1 ou 2, **caractérisé en ce que** des motifs de hurlement universel sont utilisés, ne considérant pas le sexe, l'âge et/ou la nationalité des individus protégés.

4. Procédé selon la revendication 1 ou 2 ou 3, **caractérisé en ce que** la coupure (108) de l'alimentation est signalée au moyen d'au moins un dispositif lumineux.

5. Procédé selon l'une quelconque des revendications précédentes, **caractérisé en ce que** la coupure de l'alimentation est signalée au moyen d'au moins un dispositif acoustique.

6. Système de sauvegarde de dispositifs électriques destiné à l'exécution des étapes selon l'une quelconque des revendications de 1 à 5, comprenant :
- une unité d'analyse du son (2)
- un module (1) connecté à l'unité d'analyse du son (2), commandant l'alimentation du dispositif électrique (5), en particulier pour une désactivation d'urgence de l'alimentation du dispositif électrique,
- au moins un microphone (3) recevant des bruits de fond connecté à l'unité d'analyse du son (2),
- dans lequel l'unité d'analyse du son (2) est équipée d'un micro-ordinateur (2a) réglé pour stocker les modèles de hurlement humain provoqué par la douleur et/ou la peur, et pour recevoir des données d'au moins un microphone (3), les comparer aux modèles de hurlement humain provoqué par la douleur et/ou la peur qui y sont stockés, et pour convertir le résultat de cette comparaison en un signal commandant le module (1) contrôlant l'alimentation du dispositif électrique (5) ; **caractérisé en ce que**
le micro-ordinateur (2a) est réglé pour vérifier le bon fonctionnement du système et transmettre le signal de commande au module (1) commandant l'alimentation du dispositif électrique (5), et pour faire passer automatiquement le système en mode d'analyse continue, dans lequel :
- un contrôle continu des bruits de fond est effectué,
- les sons dont la fréquence est différente de celle de la voix humaine sont filtrés,
- les sons de fond sont comparés aux modèles sonores de hurlement humain provoqué par la douleur et/ou la peur,
- en cas de détection de conformité du son enregistré avec le modèle de hurlement humain provoqué par la douleur et/ou la peur, l'alimentation du dispositif électrique (5) sauvegardé est coupée.

7. Système selon la revendication 6, **caractérisé en ce qu'**il comprend au moins un dispositif lumineux, préférentiellement une diode de commande (4).

8. Système selon la revendication 7, **caractérisé en ce que** la diode de commande (4) est réglée pour indiquer le statut actuel du système et/ou pour signaler la coupure de l'alimentation du dispositif électrique (5).

9. Système selon l'une quelconque des revendications précédentes, **caractérisé en ce qu'**il comprend un module de communication programmable permettant de transmettre des messages sur la coupure de l'alimentation du dispositif électrique (5) sauvegardé à au moins un récepteur défini.

10. Système selon l'une quelconque des revendications précédentes, **caractérisé en ce que** le module (1) commandant l'alimentation du dispositif électrique est un module électronique ou électromécanique.

11. Système selon l'une quelconque des revendications précédentes, **caractérisé en ce que** le microphone (3) recevant les bruits de fond est un microphone réglé pour fonctionner dans une plage de fréquences de 20 Hz à 20 kHz.

12. Système selon l'une quelconque des revendications précédentes, **caractérisé en ce que** le microphone (3) recevant les bruits de fond est un microphone sans fil.

13. Système selon l'une quelconque des revendications précédentes, **caractérisé en ce que** le microphone (3) recevant des bruits de fond est réglé pour communiquer dans la technologie Wifi et/ou Bluetooth.
